# FASCICULE DE BREVET EUROPEEN

(11) **EP 4 265 105 B1**
(45) Date de publication et mention de la délivrance du brevet: **12.02.2025**
(21) Numéro de dépôt: 23167593.5
(22) Date de dépôt: 12.04.2023
(51) Int. Cl.: A01K 1/00

(54) **SÉPARATEUR POUR UN BÂTIMENT D'ELEVAGE, EN PARTICULIER DE BOVINS**
SEPARATOR FÜR EIN VIEHZUCHTGEBÄUDE, INSBESONDERE FÜR RINDER
SEPARATOR FOR A CATTLE-BREEDING BUILDING, IN PARTICULAR FOR CATTLE

(30) Priorité: 13.04.2022 FR 2203390
(43) Date de publication de la demande: 25.10.2023
(73) Titulaire: Group Elastoteck, 44390 Nort sur Erdre (FR)
(72) Inventeur: BIORET, Jean-Vincent, 44390 Petit-Mars (FR)
(74) Mandataire: Jacobacci Coralis Harle

(56) Documents cités:
- GB-A- 2 492 219
- US-A- 1 996 196
- US-A1- 2017 359 997

## Description

### Domaine technique de l'invention

La présente invention concerne le domaine technique de l'élevage. Elle concerne en particulier les séparateurs pour un bâtiment d'élevage, en particulier de bovins.

### Etat de la technique

Dans un bâtiment d'élevage, en particulier de bovins, il est souvent utile d'installer des séparateurs pour délimiter la place disponible pour chaque animal et pour diminuer la pression des animaux dominants à l'auge.

De tels séparateurs sont généralement installés sur les barrières à cornadis. Ils peuvent également être intéressants le long des logettes, voir par exemple le document US1996196A.

Toutefois, en pratique, la structure de ces séparateurs n'est pas toujours optimales, avec des risques de blessures pour les animaux.

Pour limiter ce risque, il existe des séparateurs flexibles qui sont réalisés en matériau souple, voir par exemple le document US2017/359997A1.

Mais les séparateurs flexibles actuels ne sont pas encore entièrement satisfaisants sur le plan de la déformation, souvent trop flexibles.

Les animaux sont alors susceptibles de prendre appui sur ces séparateurs rendant le système peu efficace pour le positionnement de l'animal et/ou avec une perte d'efficacité dans le temps.

### Présentation de l'invention

Afin de remédier à l'inconvénient précité de l'état de la technique, la présente invention propose un séparateur pour un bâtiment d'élevage, en particulier de bovins, destiné à être solidarisé avec une structure de réception, par exemple une barrière à cornadis.

L'invention selon la revendication 1 divulgue un séparateur qui comprend :
- une partie avant, rigide, comprenant un organe tubulaire métallique,
   lequel organe tubulaire métallique comporte deux extrémités qui sont équipées de premiers moyens de solidarisation à ladite structure de réception, et
- une partie arrière, flexible latéralement, comprenant :
   - - au moins deux organes tubulaires en matériau plastique, flexibles,
      lesquels organes tubulaires en matériau plastique comportent chacun deux extrémités opposées dont une extrémité avant est solidarisée avec ledit organe tubulaire métallique par le biais de deuxièmes moyens de solidarisation, et
   - - un organe de liaison, rigide, qui est solidarisé avec une extrémité arrière desdits organes tubulaires en matériau plastique par le biais de troisièmes moyens de solidarisation.

D'autres caractéristiques non limitatives et avantageuses du produit conforme à l'invention, prises individuellement ou selon toutes les combinaisons techniquement possibles, sont les suivantes :
- la partie avant présente une cote horizontale allant de 20 à 50 cm, et la partie arrière présente une cote horizontale allant de 50 à 150 cm ;
- l'organe tubulaire métallique comprend au moins trois tronçons, à savoir un tronçon montant, destiné à venir en regard et à distance de la structure de réception, et deux tronçons de liaison, raccordés au tronçon montant et portant lesdits premiers moyens de solidarisation à ladite structure de réception ;
- l'organe de liaison est réalisé en matériau plastique rigide ;
- l'organe de liaison présente une forme générale de U et coopère par emmanchement avec l'extrémité arrière des organes tubulaires plastiques pour former ensemble les troisièmes moyens de solidarisation ;
- l'extrémité arrière d'un organe tubulaire plastique comporte une encoche dans laquelle vient se loger l'organe de liaison ;
- l'organe de liaison comporte un orifice traversant, avantageusement pour la solidarisation d'un support d'information ;
- l'organe tubulaire métallique comporte deux tronçons cylindriques recevant chacun l'extrémité avant d'un organe tubulaire plastique par emmanchement, pour former ensemble les deuxièmes moyens de solidarisation.

La présente invention concerne encore un système de séparation pour un bâtiment d'élevage selon la revendication 9, **en** particulier de bovins, destiné à être solidarisé avec une structure de réception, par exemple une barrière à cornadis.

Le système de séparation comprend :
- plusieurs séparateurs selon l'invention,
   et éventuellement
- une barre longitudinale rapportée, destinée à être solidarisée avec les séparateurs juxtaposés, et/ou
- des moyens de pulvérisation, pour le rafraichissement des animaux, avantageusement portés par ladite barre longitudinale rapportée.

La présente invention concerne encore un bâtiment d'élevage selon la revendication 10 équipé d'un système de séparation selon l'invention, rapporté sur une structure de réception, par exemple une barrière à cornadis.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique, de côté, d'un séparateur selon l'invention ;
[Fig. 2] est une vue schématique, en perspective, du séparateur selon l'invention.

Il est à noter que, sur ces figures, les éléments structurels et/ou fonctionnels communs aux différentes variantes peuvent présenter les mêmes références.

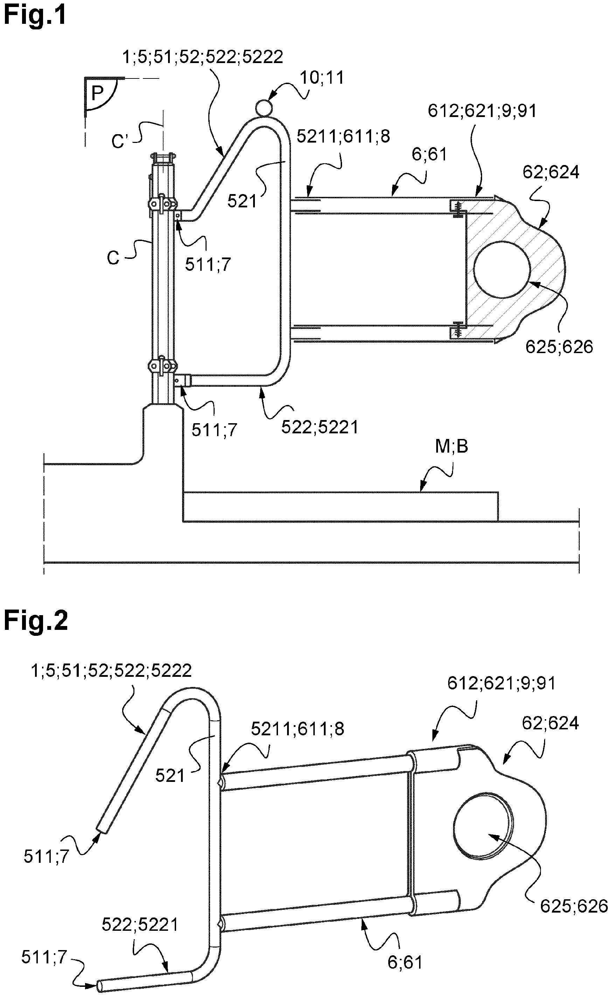

La présente invention, illustrée sur les figures 1 et 2, concerne un séparateur 1 pour un bâtiment d'élevage B, en particulier de bovins.

Le séparateur 1 est destiné à être solidarisé avec une structure de réception C, par exemple une barrière à cornadis (figure 1) ou au sein de logettes (non représentés).

Un tel séparateur 1 est en particulier utile pour délimiter la place disponible pour chaque animal (par exemple des bovins, et en particulier des vaches laitières).

Au niveau d'une barrière à cornadis C, le séparateur 1, dit encore « séparateur de cornadis », est en particulier utile pour délimiter la place disponible pour chaque animal (par exemple des bovins, et en particulier des vaches laitières) au sein d'une marche d'alimentation M.

Dans ce cas, le séparateur 1 est destiné à être solidarisé avec la barrière à cornadis C, avantageusement classique en soi. Une telle barrière à cornadis C comprend deux barres longitudinales (l'une inférieure et l'autre supérieure), horizontales, reliées par des montants verticaux. Des couples de montants délimitent, avec les deux barres longitudinales, une ouverture (adaptée au passage de la tête d'un animal) qui est équipée d'une barre de contention oscillante.

De manière générale, selon l'invention, le séparateur 1 comprend deux parties :
- une partie avant 5, rigide, avantageusement destinée à s'étendre au niveau de la tête de l'animal,
- une partie arrière 6, flexible latéralement, avantageusement destinée à s'étendre au niveau des flans de l'animal.

La partie avant 5 et la partie arrière 6 s'étendent avantageusement dans un même plan général P, de préférence vertical et perpendiculaire à un plan longitudinal C' de la structure de réception C.

En ce sens, la partie avant 5 et la partie arrière 6 présentent avantageusement des cotes particulières (mesurées dans le plan général P) :
- la partie avant 5 présente une cote horizontale allant de 20 à 50 cm, et
- la partie arrière 6 présente une cote horizontale allant de 50 à 150 cm.

De manière générale, la partie avant 5 s'étend avantageusement en porte-à-faux depuis la structure de réception C ; et la partie arrière 6 s'étend avantageusement en porte-à-faux depuis la partie avant 5.

### Partie avant

La partie avant 5, rigide, comprend un organe tubulaire métallique 51.

Cet organe tubulaire métallique 51 comporte deux extrémités 511 qui sont équipées de premiers moyens de solidarisation 7 pour la fixation à la structure de réception C.

L'organe tubulaire métallique 51 comprend avantageusement au moins trois tronçons 52 :
- un tronçon montant 521, destiné à venir en regard et à distance de la structure de réception C, portant la partie arrière 6, et
- deux tronçons de liaison 522, raccordés au tronçon montant 521 et portant les premiers moyens de solidarisation 7 à la structure de réception C.

Pour cela, l'organe tubulaire métallique 51 consiste avantageusement en un organe tubulaire métallique mis en forme par cintrage.

L'organe tubulaire métallique 51 présente avantageusement les cotes suivantes, pouvant être prises en combinaison ou indépendamment les unes des autres :
- un diamètre allant de 40 à 70 mm,
- une épaisseur allant 2 à 5 mm.

En particulier, le tronçon montant 521 s'étend avantageusement verticalement.

Ce tronçon montant 521 s'étend par exemple sur une hauteur allant de 1 000 à 1 800 mm.

Les tronçons de liaison 522 comprennent avantageusement :
- un tronçon de liaison inférieur 5221, avantageusement horizontal, et
- un tronçon de liaison supérieur 5222, avantageusement incliné (descendant de l'arrière vers l'avant).

Chaque tronçon de liaison 522 comporte, à l'opposé du tronçon montant 521, l'une des deux extrémités 511 qui sont équipées de premiers moyens de solidarisation 7.

Les premiers moyens de solidarisation 7 sont avantageusement choisis parmi les moyens de liaison mécaniques adaptés à une solidarisation avec la structure de réception C, par exemple des colliers venant autour des barres longitudinales ou des montants verticaux.

L'organe tubulaire métallique 51, et en particulier son tronçon montant 521, comporte avantageusement au moins deux tronçons cylindriques 5211, métalliques, recevant chacun la partie arrière 6 par emmanchement, pour former ensemble des deuxièmes moyens de solidarisation 8.

### Partie arrière

La partie arrière 6, flexible latéralement, comprend :
- au moins deux organes tubulaires plastiques 61, flexibles, et
- un organe de liaison 62, rigide, qui est solidarisé avec les organes tubulaires plastiques 61.

Par organe tubulaire plastique « flexible », on entend en particulier un organe tubulaire plastique qui est apte, d'une part, à être déformé par l'animal venant s'appuyer sur la partie arrière 6 et, d'autre part, à reprendre totalement sa forme après l'arrêt de l'appui exercé par l'animal.

Chaque organe tubulaire plastique 61 est avantageusement rectiligne, au repos.

Cet organe tubulaire plastique 61 s'étend avantageusement horizontalement, une fois installé.

Les organes tubulaires plastiques 61 s'étendent avantageusement parallèlement l'un par rapport à l'autre.

Un organe tubulaire plastique 61 est réalisé en matériau plastique (ou matière plastique), fabriqué avantageusement par extrusion.

Un organe tubulaire plastique 61 est par exemple réalisé dans un matériau choisi parmi PEHD (polyéthylène haute densité) ou PP (polypropylène).

L'organe tubulaire plastique 61 présente avantageusement les cotes suivantes, pouvant être prises en combinaison ou indépendamment les unes des autres :
- une longueur allant de 500 à 2 000 mm,
- un diamètre allant de 25 à 70 mm,
- une épaisseur allant de 5 à 20 mm.

Chaque organe tubulaire 61 comporte deux extrémités :
- une extrémité avant 611, solidarisée avec l'organe tubulaire métallique 51 par le biais des deuxièmes moyens de solidarisation 8, et
- une extrémité arrière 612, solidarisée avec l'organe de liaison 62 par le biais de troisièmes moyens de solidarisation 9.

L'extrémité avant 611 d'un organe tubulaire plastique 61 est avantageusement emmanché avec un tronçon cylindrique 5211 porté par le tronçon montant 521, pour former ensemble les deuxièmes moyens de solidarisation 8.

L'emmanchement entre l'extrémité avant 611 d'un organe tubulaire plastique 61 et un tronçon cylindrique 5211 peut être verrouillé par un insert métallique, par exemple une goupille.

Par ailleurs, par organe de liaison 62 « rigide », on entend en particulier un organe de liaison 62 qui ne subit pas de déformation lors de la déformation des organes tubulaires plastiques 61 associés.

L'organe de liaison 62 est réalisé avantageusement en matériau plastique rigide, fabriqué avantageusement par moulage par injection.

L'organe de liaison 62 assure avantageusement une déformation identique en flexion latérale sur les organes tubulaires plastiques 61 (de part et d'autre du plan général P), lorsqu'une pression latérale est appliquée sur la partie arrière 6 ; en d'autres termes, l'organe de liaison 62 subit des mouvements de rotation, par rapport à un axe vertical, de part et d'autre du plan général P.

Cet organe de liaison 62, reliant au moins deux organes tubulaires plastiques 61, empêche également un mouvement vertical de ces organes tubulaires plastiques 61 (dans le plan général P, vers le haut ou vers le bas) lors de l'appui d'un animal.

Pour cela, l'organe de liaison 62 présente avantageusement une forme générale de U et coopère par emmanchement avec l'extrémité arrière 612 des organes tubulaires plastiques 61 pour former ensemble les troisièmes moyens de solidarisation 9.

Pour cela, l'organe de liaison 62 comporte ici deux tronçons cylindriques 621 qui sont chacun destinés à venir se loger dans l'extrémité arrière 612 d'un organe tubulaire plastique 61.

En l'espèce, du fait de la rigidité de l'organe de liaison 62, les tronçons cylindriques 621 ne subissent pas de mouvements relatifs lors de la déformation des organes tubulaires plastiques 61 associés. Ces tronçons cylindriques 621 restent ainsi parallèles et équidistants.

L'emmanchement entre l'organe de liaison 62 et l'extrémité arrière 612 d'un organe tubulaire plastique 61 peut être verrouillé par un insert 91, par exemple une goupille.

L'extrémité arrière 612 d'un organe tubulaire plastique 61 comporte avantageusement une encoche dans laquelle vient se loger l'organe de liaison 62 (en particulier pour limiter l'effort sur les moyens de fixation).

De manière générale, par ailleurs, l'organe de liaison 62 comporte une surface arrière 624 présentant une section courbe (perpendiculairement au plan général P).

L'organe de liaison 62 comporte également deux faces latérales (désignées par le repère 625) s'étendant de part et d'autre du plan général P.

La largeur de l'organe de liaison 62, correspondant à la distance entre les faces latérales 625, correspond avantageusement au diamètre des organes tubulaires plastiques 61.

L'organe de liaison 62 comporte un orifice traversant 626, débouchant au travers des faces latérales 625 et orienté perpendiculairement au plan général P, avantageusement pour la solidarisation d'un support d'information.

### Système de séparation

En pratique, l'invention est mise en oeuvre sous la forme d'un système de séparation qui comprend :
- plusieurs séparateurs 1 selon l'invention, avantageusement en bataille,
   et éventuellement
- une barre longitudinale rapportée 10, destinée à être solidarisée avec les séparateurs 1 juxtaposés, et/ou
- des moyens de pulvérisation 11, pour le rafraichissement des animaux, avantageusement portés par la barre longitudinale rapportée 10.

La barre longitudinale rapportée 10 est solidarisée ici avec la partie avant 5, de préférence au niveau de l'extrémité supérieure du tronçon montant 521.

Les moyens de pulvérisation 7 consistent par exemple en des buses connectées à un circuit d'alimentation hydrique.

Le bâtiment d'élevage B est ainsi équipé d'un système de séparation selon l'invention, rapporté sur une structure de réception C, par exemple une barrière à cornadis.

Bien entendu, diverses autres modifications peuvent être apportées à l'invention dans le cadre des revendications annexées.

## Revendications

1. Séparateur pour un bâtiment d'élevage, en particulier de bovins, destiné à être solidarisé avec une structure de réception (C), par exemple une barrière à cornadis, comprenant :
- une partie avant (5), rigide, comprenant un organe tubulaire métallique (51),
lequel organe tubulaire métallique (51) comporte deux extrémités (511) qui sont équipées de premiers moyens de solidarisation (7) à ladite structure de réception (C), et
- une partie arrière (6),
**caractérisé en ce que** la partie arrière (6) est flexible latéralement, et qu'elle comprend :
- - au moins deux organes tubulaires en matériau plastique (61), flexibles,
lesquels organes tubulaires en matériau plastique (61) comportent chacun deux extrémités (611, 612) opposées dont une extrémité avant (611) est solidarisée avec ledit organe tubulaire métallique (51) par le biais de deuxièmes moyens de solidarisation (8), et
- - un organe de liaison (62), rigide, qui est solidarisé avec une extrémité arrière (612) desdits organes tubulaires en matériau plastique (61) par le biais de troisièmes moyens de solidarisation (9).

2. Séparateur pour un bâtiment d'élevage, selon la revendication 1, **caractérisé en ce que** la partie avant (5) présente une cote horizontale allant de 20 à 50 cm, et la partie arrière (6) présente une cote horizontale allant de 50 à 150 cm.

3. Séparateur pour un bâtiment d'élevage, selon l'une quelconque des revendications 1 ou 2, **caractérisé en ce que** l'organe tubulaire métallique (51) comprend au moins trois tronçons :
- un tronçon montant (521), destiné à venir en regard et à distance de la structure de réception (C), et
- deux tronçons de liaison (522), raccordés au tronçon montant (521) et portant lesdits premiers moyens de solidarisation (7) à ladite structure de réception (C).

4. Séparateur pour un bâtiment d'élevage, selon l'une quelconque des revendications 1 à 3, **caractérisé en ce que** l'organe de liaison (62) est réalisé en matériau plastique rigide.

5. Séparateur pour un bâtiment d'élevage, selon l'une quelconque des revendications 1 à 4, **caractérisé en ce que** l'organe de liaison (62) présente une forme générale de U et coopère par emmanchement avec l'extrémité arrière (612) des organes tubulaires en matériau plastique (61) pour former ensemble les troisièmes moyens de solidarisation (9).

6. Séparateur pour un bâtiment d'élevage, selon l'une quelconque des revendications 1 à 5, **caractérisé en ce que** l'extrémité arrière (612) d'un organe tubulaire en matériau plastique (61) comporte une encoche dans laquelle vient se loger l'organe de liaison (62).

7. Séparateur pour un bâtiment d'élevage, selon l'une quelconque des revendications 1 à 6, **caractérisé en ce que** l'organe de liaison (62) comporte un orifice traversant (626), avantageusement pour la solidarisation d'un support d'information.

8. Séparateur pour un bâtiment d'élevage, selon l'une quelconque des revendications 1 à 7, **caractérisé en ce que** l'organe tubulaire métallique (51) comporte deux tronçons cylindriques (5211) recevant chacun l'extrémité avant (611) d'un organe tubulaire en matériau plastique (61) par emmanchement, pour former ensemble les deuxièmes moyens de solidarisation (8).

9. Système de séparation pour un bâtiment d'élevage, en particulier de bovins, destiné à être solidarisé avec une structure de réception (C), par exemple une barrière à cornadis,
lequel système de séparation comprend :
- plusieurs séparateurs (1) selon l'une quelconque des revendications 1 à 8,
et éventuellement
- une barre longitudinale rapportée (10), destinée à être solidarisée avec lesdits séparateurs (1) juxtaposés, et/ou
- des moyens de pulvérisation (11), pour le rafraichissement des animaux, avantageusement portés par ladite barre longitudinale rapportée (10).

10. Bâtiment d'élevage équipé d'un système de séparation selon la revendication 9, rapporté sur une structure de réception (C), par exemple une barrière à cornadis.

## Patentansprüche

1. Separator für ein Viehzuchtgebäude, insbesondere für Rinder, der dafür bestimmt ist, mit einer Aufnahmestruktur (C), zum Beispiel einer Cornadis-Barriere, fest verbunden zu werden,
mit:
- einem ein rohrförmiges metallenes Organ (51) aufweisenden steifen vorderen Teil (5), wobei das rohrförmige metallene Organ (51) zwei Enden (511) aufweist, die mit ersten Mitteln (7) zur Befestigung an der Aufnahmestruktur (C) ausgestattet sind, und
- einem hinteren Teil (6),
**dadurch gekennzeichnet, daß** der hintere Teil (6) seitlich flexibel ist und daß er
-- mindestens zwei rohrförmige flexible Organe (61) aus Plastikmaterial, wobei die beiden rohrförmigen Organe (61) aus Plastikmaterial jeweils zwei entgegengesetzte Enden (611, 612) aufweisen, von denen ein vorderes Ende (611) mit dem rohrförmigen metallenen Organ (51) über zweite Befestigungsmittel (8) verbunden ist, und
-- ein steifes Verbindungsorgan (62), das mit einem hinteren Ende (612) des rohrförmigen Organs aus Plastikmaterial über dritte Befestigungsmittel (9) verbunden ist,
aufweist.

2. Separator für ein Viehzuchtgebäude gemäß Anspruch 1, **dadurch gekennzeichnet, daß** der vordere Teil (5) eine horizontale Abmessung von 20 bis 50 cm aufweist und daß der hintere Teil (6) eine horizontale Abmessung von 50 bis 150 cm aufweist.

3. Separator für ein Viehzuchtgebäude gemäß einem der Ansprüche 1 oder 2, **dadurch gekennzeichnet, daß** das rohrförmige metallene Organ (51) mindestens drei Abschnitte aufweist:
- einen aufsteigenden Abschnitt (521), der dazu bestimmt ist, der Aufnahmestruktur (C) gegenüberliegend und in einem Abstand zu ihr angeordnet zu sein, und
- zwei mit dem aufsteigenden Abschnitt (521) verbundene und die ersten Mittel (7) zur Befestigung an der Aufnahmestruktur (C) tragende Verbindungsabschnitte (522).

4. Separator für ein Viehzuchtgebäude gemäß einem der Ansprüche 1 bis 3, **dadurch gekennzeichnet, daß** das Verbindungsorgan (62) aus steifem Plastikmaterial hergestellt ist.

5. Separator für ein Viehzuchtgebäude gemäß einem der Ansprüche 1 bis 4, **dadurch gekennzeichnet, daß** das Verbindungsorgan (62) eine allgemeine U-Form aufweist und durch Zusammenstecken mit dem hinteren Ende (612) der rohrförmigen Organe (61) aus Plastikmaterial zusammenwirkt, um zusammen die dritten Befestigungsmittel zu bilden.

6. Separator für ein Viehzuchtgebäude gemäß einem der Ansprüche 1 bis 5, **dadurch gekennzeichnet, daß** das hintere Ende (612) eines rohrförmigen Organs (61) aus Plastikmaterial eine Aussparung aufweist, in der das Verbindungsorgan (61) zu liegen kommt.

7. Separator für ein Viehzuchtgebäude gemäß einem der Ansprüche 1 bis 6, **dadurch gekennzeichnet, daß** das Verbindungsorgan (62) ein Durchgangsloch (626) aufweist, vorzugsweise für die Befestigung eines Informationsträgers.

8. Separator für ein Viehzuchtgebäude gemäß einem der Ansprüche 1 bis 7, **dadurch gekennzeichnet, daß** das rohrförmige metallene Organ (51) zwei zylindrische Abschnitte (5211) aufweist, die jeweils das vordere Ende (611) eines rohrförmigen Organs (61) aus Plastikmaterial durch Einstecken aufnehmen, um gemeinsam die zweiten Befestigungsmittel (8) zu bilden.

9. Trennsystem für ein Viehzuchtgebäude, insbesondere für Rinder, das dafür bestimmt ist, mit einer Aufnahmestruktur (C), zum Beispiel einer Cornadis-Barriere, fest verbunden zu werden,
wobei das Trennsystem
- mehrere Separatoren (1) gemäß einem der Ansprüche 1 bis 8 und eventuell
- eine angesetzte Längsstange (10), die dazu bestimmt ist, mit den nebeneinander angeordneten Separatoren (1) fest verbunden zu sein, und/oder
- vorteilhafterweise von der angesetzten Längsstange (10) getragene Sprühmittel (11) für die Erfrischung der Tiere
aufweist.

10. Viehzuchtgebäude, das mit einem Trennsystem gemäß Anspruch 9 ausgestattet ist, das an einer Aufnahmestruktur (C), zum Beispiel einer Cornadis-Barriere, angebracht ist.

## Claims

1. A separator for livestock building, especially for cattle, intended to be fastened to a receiving structure (C), for example a feed fence, comprising:
- a rigid front part (5), comprising a metallic tubular member (51), said metallic tubular member (51) having two ends (511) that are equipped with first means (7) for the fastening to said receiving structure (C), and
- a rear part (6),
**characterized in that** the rear part (6) is laterally flexible, and comprises:
o at least two flexible, plastic tubular members (61), said plastic tubular members (61) each having two opposite ends (611, 612), with a front end (611) fastened to said metallic tubular member (51) via second fastening means (8), and
o a rigid linking member (62), which is fastened to a rear end (612) of said plastic tubular members (61) via third fastening means (9).

2. The separator for livestock building according to claim 1, **characterized in that** the front part (5) has a horizontal size from 20 to 50 cm, and the rear part (6) has a horizontal size from 50 to 150 cm.

3. The separator for livestock building according to any one of claims 1 or 2, **characterized in that** the metallic tubular member (51) comprises at least three sections:
- an upright section (521), intended to come opposite and remote the receiving structure (C), and
- two linking sections (522), connected to the upright section (521) and carrying said first means (7) for the fastening to said receiving structure (C).

4. The separator for livestock building according to any one of claims 1 to 3, **characterized in that** the linking member (62) is made of a rigid plastic material.

5. The separator for livestock building according to any one of claims 1 to 4, **characterized in that** the linking member (62) has a generally U-shape and cooperates with the rear end (612) of the plastic tubular members (61) in an interlocked arrangement, to form together the third fastening means (9).

6. The separator for livestock building according to any one of claims 1 to 5, **characterized in that** the rear end (612) of a plastic tubular member (61) includes a notch into which is received the linking member (62).

7. The separator for livestock building according to any one of claims 1 to 6, **characterized in that** the linking member (62) has a through-hole (626), advantageously for fastening an information carrier.

8. The separator for livestock building according to any one of claims 1 to 7, **characterized in that** the metallic tubular member (51) includes two cylindrical sections (5211) each receiving the front end (611) of a plastic tubular member (61) in an interlocked arrangement, to form together the second fastening means (8).

9. A separating system for livestock building, especially for cattle, intended to be fastened to a receiving structure (C), for example a feed fence, said separating system comprising:
- several separators (1) according to any one of claims 1 to 8, and possibly
- an added longitudinal bar (10), intended to be fastened to said juxtaposed separators (1), and/or
- spraying means (11), for refreshing the animals, advantageously carried by said added longitudinal bar (10).

10. A livestock building equipped with a separation system according to claim 9, added on a receiving structure (C), for example a feed fence.
